# EUROPÄISCHE PATENTSCHRIFT

(11) **EP 3 268 321 B1**
(45) Veröffentlichungstag und Bekanntmachung des Hinweises auf die Patenterteilung: **30.01.2019**
(21) Anmeldenummer: 16707631.4
(22) Anmeldetag: 26.02.2016
(51) Int. Cl.: C03B 23/03, C03B 23/035, C03C 17/34, G06F 3/0488

(54) **OBERFLÄCHENELEMENT FÜR EINE BEDIENEINRICHTUNG EINES KRAFTFAHRZEUGS**
SURFACE ELEMENT FOR AN OPERATING DEVICE OF A MOTOR VEHICLE
ÉLÉMENT DE SURFACE POUR DISPOSITIF DE COMMANDE D'UN VÉHICULE À MOTEUR

(30) Priorität: 07.03.2015 DE 102015002966
(43) Veröffentlichungstag der Anmeldung: 17.01.2018
(73) Patentinhaber: Audi AG, 85045 Ingolstadt (DE)
(72) Erfinder: KÜHNER, Manuel, 71706 Markgröningen (DE); WACHINGER, Michael, 86571 Winkelhausen (DE); MÜLLER, Ulrich, 85055 Ingolstadt (DE)
(74) Vertreter: Brandt, Kai
(86) Internationale Anmeldenummer: PCT/EP2016/000341
(87) Internationale Veröffentlichungsnummer: WO 2016/142039

(56) Entgegenhaltungen:
- WO-A2-2014/060108
- WO-A2-2014/166598
- DE-A1-102013 000 365
- US-A1- 2010 279 068
- US-A1- 2012 187 112
- US-A1- 2013 189 486
- DATABASE WPI Week 201471 13 August 2014 (2014-08-13) Thomson Scientific, London, GB; AN 2014-T80572 & CN 103 979 798 A (LENOVO BEIJING CO LTD) 13 August 2014 (2014-08-13)

## Beschreibung

Die Erfindung betrifft ein Verfahren zum Herstellen eines Oberflächenelements für eine Bedieneinrichtung eines Kraftfahrzeugs gemäß dem Oberbegriff des Patentanspruchs 1.

Aus der DE 10 2013 000 365 A1 ist ein Oberflächenelement für eine Bedieneinrichtung eines Kraftfahrzeugs bekannt, welches eine Mehrzahl von Oberflächenbereichen umfasst, durch deren Berührung eine jeweilige Bedieneingabe erfolgt. Das Oberflächenelement kann dabei ein Glaselement umfassen, welches in einem Tiefziehprozess gefertigt worden ist und welches eine Bedienoberfläche der Bedieneinrichtung bildet. Dieses Glaselement bildet eine lichtdurchlässige Schicht, welche wenigstens eine Inhomogenität aufweist, mittels welcher ein Auskoppeln von durch eine Lichtquelle der Bedieneinrichtung erzeugten Lichts aus der lichtdurchlässigen Schicht bewirkbar ist. Eine solche Inhomogenität kann beispielsweise eine Oberflächenstruktur in Form von Rillen, Vertiefungen oder Erhebungen sein.

Das so bewerkstelligte Beleuchten des Oberflächenelements erleichtert die Orientierung für einen Nutzer der Bedieneinrichtung. Der Nutzer kann somit im Dunkeln aufgrund des aus der lichtdurchlässigen Schicht austretenden Lichts die Bedieneinrichtung besonders gut bedienen. Nachteilig ist dabei jedoch, dass der Nutzer für eine Erleichterung seiner Orientierung auf die Bedieneinrichtung schauen muss. Wenn der Nutzer nicht auf die Bedieneinrichtung schaut und/oder wenn es zu hell sein sollte, kann ein solches Beleuchten des Oberflächenelements also eine Betätigung der Bedieneinrichtung nicht erleichtern.

Aus der DE 10 2009 050 568 A1 ist ein Oberflächenelement für eine Bedieneinrichtung eines Kraftfahrzeugs bekannt, bei welcher ein Glaselement mit einer zusätzlichen Beschichtung versehen ist. Mittels dieser zusätzlichen Beschichtung, welche auf das Glaselement aufgebracht wird, kann eine bestimmte Oberflächenbeschaffenheit des Oberflächenelements vorgegeben werden. Dadurch kann das Oberflächenelement besonders resistent gegen Verschmutzung und Abrieb sein. Im Übrigen kann durch die Beschichtung eine Reibung bei einem Berühren des Oberflächenelements reduziert werden, wodurch eine Bedienung der Bedieneinrichtung besonders einfach wird.

Aus der CN 103 019 455 A ist ein Verfahren zur Herstellung eines Oberflächenelements für eine Bedieneinrichtung bekannt, welches ein Glaselement umfasst. Bei der Bedieneinrichtung kann es sich beispielsweise um ein sogenanntes Trackpad handeln.

Aus der WO 2014/060108 A2 ist ein Bedienelement für einen Kraftwagen bekannt, welches eine Bedienoberfläche zur Eingabe von Benutzerinstruktionen für eine Komponente des Kraftwagens aufweist. Diese Bedienoberfläche weist zumindest ein von einem Benutzer ertastbares Oberflächenstrukturelement auf, wobei die Bedienoberfläche aus Glas und das zumindest eine Oberflächenstrukturelement einstückig mit der Bedienoberfläche ausgebildet ist. Durch das Oberflächenstrukturelement kann zumindest eine Teilbedienfläche der Bedienoberfläche abgegrenzt und/oder markiert werden. Das Oberflächenstrukturelement kann durch Ziehen der Bedienoberfläche im erwärmten Zustand ausgebildet werden. Jeweilige Oberflächenstrukturen können unterschiedliche Höhen und unterschiedliche Oberflächenbeschaffenheiten, wie beispielsweise Riffelung, Nabung, Symboliken oder dergleichen, aufweisen.

Aus der US 2010/0279068 A1 ist ein Verfahren zum Herstellen eines Glaselements bekannt, bei welchem dessen Oberfläche speziell aufgeraut wird. Durch diese Aufrauung entstehen weniger Fingerabdrücke auf der Oberfläche des Glaselements, wenn dieses berührt wird. Es werden mögliche Nachbearbeitungen der Oberfläche beschrieben: Entweder ein Polieren, ein chemisches Härten, beispielsweise durch lonenaustausch, oder ein Glühen und/oder Waschen der Oberfläche. Diese Druckschrift wurde zur Formulierung des Oberbegriffs von Patentanspruch 1 herangezogen.

Aus der CN 103979798 A ist ein Glasverarbeitungsverfahren, Glas und eine elektronische Vorrichtung bekannt. Das Verfahren wird für Glas verwendet und umfasst das Ätzen eines voreingestellten Musters auf mindestens einer Oberfläche des Glases, um das Musterglas mit dem Muster zu erhalten, und Unterwerfen des Musterglases einer Thermokompression, sodass das Musterglas eine Kurve ist, wodurch das Musterkurvenglas mit stereoskopischen Sichteffekten erhalten wird.

Aufgabe der vorliegenden Erfindung ist es, ein Verfahren der eingangs genannten Art zu schaffen, mittels welchem die Bedienung einer Bedieneinrichtung eines Kraftfahrzeugs besonders vereinfacht ist.

Diese Aufgabe wird erfindungsgemäß durch ein Verfahren zum Herstellen eines Oberflächenelements für eine Bedieneinrichtung eines Kraftfahrzeugs mit den Merkmalen des Patentanspruchs 1 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Oberflächenelements als vorteilhafte Ausgestaltungen des Verfahrens und umgekehrt anzusehen sind.

Die nachfolgenden Ausführungen betreffen ein Oberflächenelement für eine Bedieneinrichtung eines Kraftfahrzeugs, welches ein in einem Tiefziehprozess gefertigtes Glaselement mit einer Mehrzahl von Oberflächenbereichen umfasst, durch deren Berührung eine jeweilige Bedieneingabe erfolgt. Dabei ist es vorgesehen, dass die jeweiligen Oberflächenbereiche durch entsprechende Strukturelemente in dem Glaselement haptisch erfühlbar markiert sind. Wenigstens ein Teil einer Bedienoberfläche der Bedieneinrichtung kann durch das Oberflächenelement gebildet werden. Unter markiert ist dabei zu verstehen, dass die jeweiligen Oberflächenbereiche durch die entsprechenden Strukturelemente so kenntlich gemacht sind, dass sie insbesondere mittels einer Berührung einer Bedienoberfläche der Bedieneinrichtung erfühlbar und/oder ertastbar sind. Deswegen können diese Strukturelemente auch als Fühlhilfe bezeichnet werden. Aufgrund der Strukturelemente kann ein Nutzer fühlen, auf welchem Oberflächenbereich der Bedieneinrichtung sich beispielsweise sein Finger befindet. Entsprechend kann sich der Nutzer auf der Bedieneinrichtung orientieren, ohne dass er auf diese schauen muss. Es kann also besonders einfach eine blinde Bedienung erfolgen, ohne dass der Nutzer fehlerhafte Bedieneingaben vornimmt. Dadurch ist die Bedienung der Bedieneinrichtung, welche wenigstens ein solches Oberflächenelement umfasst, besonders vereinfacht.

Die Strukturelemente sind beispielsweise als Vertiefung, Erhöhung, Mulden oder Krümmungen der Oberfläche ausgebildet. Dadurch kann beispielsweise ein Finger des Nutzers zu dem korrekten Oberflächenbereich für eine Bedieneingabe geleitet werden. Dass die Strukturelemente in dem Glaselement ausgebildet sind, bedeutet dabei, dass die Strukturelemente mit dem Glaselement vorzugsweise einstückig gemeinsam ein einzelnes Element der Bedieneinrichtung bilden. Dadurch ist das Oberflächenelement besonders robust, da sich die Strukturelemente nicht von dem Glaselement lösen können. Weiterhin kann das Oberflächenelement so besonders kostengünstig hergestellt werden, da die Strukturelemente nicht zunächst getrennt von dem Glaselement hergestellt werden müssen, um dann anschließend in einem weiteren Fertigungsschritt mit diesem verbunden zu werden.

Das Oberflächenelement kann beispielsweise Teil einer Bedieneinrichtung für ein Entertainmentsystem, ein Radio, ein Navigationssystem, eine Klimaanlage und/oder Fahrwerkseinstellungen des Kraftfahrzeugs sein. Vorzugseise ist die Bedieneinrichtung als Touchpad oder als Touchscreen ausgebildet. Bei der Berührung der Oberflächenbereiche kann auch eine vorbestimmte Mindestberührkraft zum Auslösen der jeweiligen Bedieneingabe erforderlich sein. Mit dem Oberflächenelement kann eine Bedieneinrichtung mit Echtglas Bedienoberfläche geschaffen werden.

Wenigstens eines der Strukturelemente kann als Stufe ausgebildet sein, welche den zugeordneten Oberflächenbereich zumindest bereichsweise begrenzt. Eine Stufe ist für einen Nutzer der Bedieneinrichtung besonders gut haptisch erfühlbar. Außerdem kann eine Stufe das Risiko einer unbeabsichtigten Bedieneingabe reduzieren. Beispielsweise kann die Stufe besonders gut verhindern, dass der Finger eines Nutzers unbeabsichtigterweise von einem Oberflächenbereich zu einem anderen Oberflächenbereich gleitet. Auch die Stufe kann mit einer Neigung, einer Rundung und/oder einer Wölbung versehen sein.

Es kann vorgesehen sein, dass wenigstens eines der Strukturelemente als Flächenstrukturelement ausgebildet ist, mittels welchem zumindest ein Teil des entsprechenden Oberflächenbereichs versehen ist. Dadurch können auch großflächige Oberflächenbereiche jederzeit für einen Nutzer haptisch erfühlbar sein. Das ist beispielsweise von Vorteil, wenn ein großflächiger Oberflächenbereich zum Steuern beispielsweise eines Cursors vorgesehen ist.

Weiterhin kann mit dem Flächenstrukturelement eine bestimmte Oberflächenbeschaffenheit, insbesondere eine bestimmte Oberflächenrauigkeit des Oberflächenbereichs vorgesehen sein. Das Flächenstrukturelement ist dann beispielsweise als Mikrostruktur ausgebildet. Durch das Flächenstrukturelement, insbesondere durch die vorgebbare Oberflächenrauigkeit, kann das Oberflächenelement besonders schmutzabweisend ausgebildet sein. Durch eine solche vorgebbare Oberflächenrauigkeit kann auch bewirkt werden, dass ein Finger eines Nutzers mit besonders wenig Widerstand und/oder besonders leise über die Bedienoberfläche der Bedieneinrichtung gleiten kann. Da das Flächenstrukturelement in dem Glaselement ausgebildet ist, ist es zudem besonders widerstandsfähig gegen Abrieb. Dagegen können Flächenstrukturelement und/oder eine Oberflächenschicht, welche beispielsweise zusätzlich auf das Glaselement aufgetragen ist oder sind, durch wiederholte Bedieneingaben schnell wenigstens teilweise abgerieben werden.

Das Flächenstrukturelement kann die gesamte Bedienoberfläche des Oberflächenelements beziehungsweise der Bedieneinrichtung bedecken. Insbesondere kann das Flächenstrukturelement auch weitere Strukturelemente überlagern. Beispielsweise kann ein als Erhöhung ausgebildetes Strukturelement durch ein weiteres als Flächenstrukturelement ausgebildetes Strukturelement mit einer bestimmten Oberflächenrauigkeit versehen werden.

Es kann vorgesehen sein, dass wenigstens eines der Strukturelemente in dem Tiefziehprozess eingebracht ist. Dann ist das Oberflächenelement besonders kostengünstig herstellbar, da auf zusätzliche Fertigungsschritte zum Einbringen des Strukturelements und/oder Herstellen des Glaselements verzichtet werden kann.

Es kann vorgesehen sein, dass wenigstens eines der Strukturelemente eine durch Ätzen nachbearbeitete Oberfläche aufweist. Durch die Nachbearbeitung mit einer Ätzung kann ein besonders runder und/oder fließender Übergang zwischen einem Strukturelement und daran angrenzenden Oberflächenbereichen des Glaselements vorgesehen werden. Eventuell scharfkantige Bereiche des Strukturelements können so geglättet werden. Das Ätzen ist insbesondere vorteilhaft bei einem Flächenstrukturelement, da so eine Mikrostruktur des Flächenstrukturelements geglättet werden kann. Insbesondere, wenn mittels des Flächenstrukturelements eine vorbestimmte Oberflächenrauigkeit vorgesehen wird, kann dieses Flächenstrukturelement durch ein Ätzen robuster gegen Abrieb gemacht werden.

Es kann vorgesehen sein, dass auf einer Rückseite des Glaselements wenigstens zwei Farbschichten aufgebracht sind, wobei diese durch einen farblichen Kontrast wenigstens ein auf einem der Oberflächenbereiche sichtbares Symbol bilden. Die Rückseite des Glaselements entspricht dabei der Seite der Bedieneinrichtung, welche der Bedienoberfläche abgewandt ist. Die Bedienoberfläche ist dagegen also die Seite des Glaselements, auf welcher Bedieneingaben durch einen Nutzer der Bedieneinrichtung erfolgen können. Durch diese Anordnung der zwei Farbschichten sind diese, und damit auch das sichtbare Symbol, vor Abrieb durch Bedieneingaben geschützt. Mittels des sichtbaren Symbols können bestimmte Oberflächenbereiche optisch kenntlich gemacht werden, insbesondere zusätzlich zu einer haptisch erfühlbaren Markierung. Insbesondere können so Oberflächenbereiche, welche einer speziellen Bedieneingabe zugeordnet sind, kenntlich gemacht werden. Bei den Symbolen kann es sich beispielsweise um geometrische Formen, Zahlen, Buchstaben und/oder Schriftzüge handeln.

Damit ein durch zwei Farbschichten auf der Rückseite des Glaselements gebildetes Symbol sichtbar ist, muss das Glaselement wenigstens in Teilbereichen so transparent sein, dass der Kontrast von einem Nutzer wahrgenommen werden kann. Das Symbol wird beispielsweise dadurch gebildet, dass die erste Farbschicht die Rückseite des Glaselements nur teilweise bedeckt. An den Stellen, an welchen die erste Farbschicht die Rückseite nicht bedeckt, ist dann die zweite Farbschicht für den Nutzer der Bedieneinrichtung sichtbar. Vorzugsweise sind die Farbschichten nicht elektrisch leitend, damit eine Bedieneingabe nicht behindert wird.

In weiterer vorteilhafter Ausgestaltung der Erfindung ist es vorgesehen, dass das Glaselement aus einem Kalk-Natron-Glas gebildet ist. Kalk-Natron-Glas ist ein besonders kostengünstiger Werkstoff und zudem eignet sich Kalk-Natron-Glas besonders gut für ein Tiefziehverfahren. Vorzugsweise beträgt die Dicke des Glaselements 1,0 +/- 0,05 Millimeter. Ein so dünnes Glaselement ist besonders kostengünstig herstellbar, leicht und dennoch stark genug, um auch bei kraftvollen Bedieneingaben nicht beschädigt zu werden.

Die Erfindung betrifft ein Verfahren zum Herstellen eines Oberflächenelements für eine Bedieneinrichtung eines Kraftfahrzeugs, bei welchem ein Glaselement mit einer Mehrzahl von Oberflächenbereichen, durch deren Berührung eine jeweilige Bedieneingabe erfolgt, in einem Tiefziehprozess gefertigt wird. Die sich aus den obigen Ausführungen ergebenden Merkmale und Vorteile sind als vorteilhafte Ausgestaltungen der Erfindung anzusehen.

Erfindungsgemäß ist es bei dem Verfahren vorgesehen, dass jeweilige Strukturelemente in das Glaselement eingebracht werden, durch die die jeweiligen Oberflächenbereiche haptisch erfühlbar markiert werden. Damit kann ein Oberflächenelement hergestellt werden, mittels welchem eine Bedienung einer Bedieneinrichtung eines Kraftfahrzeugs besonders vereinfacht ist.

Insbesondere können dabei die jeweiligen Strukturelemente ebenfalls in einem Tiefziehprozess zusammen einteilig mit dem Glaselement hergestellt werden. So ist das Oberflächenelement besonders kostengünstig herstellbar. Außerdem wird so ein Oberflächenelement hergestellt, welches ein Glaselement mit einstückigen ausgebildeten Strukturelementen umfasst. Dadurch ist das Oberflächenelement besonders robust.

Im Anschluss an den Tiefziehprozess, welcher auch als Tiefziehverfahren bezeichnet werden kann, werden wenigstens Teilbereiche der Oberfläche des Glaselements geätzt. Mittels einer solchen Ätzung wird die Oberflächenbeschaffenheit, insbesondere die Oberflächenrauigkeit, besonders kostengünstig verbessert. Insbesondere die Ätzung bereits eingebrachter Strukturelemente ist dabei sinnvoll.

Abschließend kann das Glaselement umlaufend von der Bedienoberfläche geschliffen werden. Damit kann ein Glaselement mit besonders präzisen Abmessungen erzeugt werden.

In weiterer vorteilhafter Ausgestaltung des Verfahrens ist es vorgesehen, dass wenigstens eines der Strukturelemente als Flächenstrukturelement ausgebildet ist, mittels welchem zumindest ein Teil des entsprechenden Oberflächenbereichs versehen ist, wobei das Flächenstrukturelement mit einem korrespondierenden Flächenstrukturelement eines Formwerkzeugs in dem Tiefziehprozess eingebracht wird. Mittels des so eingebrachten Flächenstrukturelements kann eine bestimmte Oberflächenrauigkeit besonders kostengünstig bereitgestellt werden. Vorzugsweise weist das Formwerkzeug dabei ein Flächenstrukturelement auf, dessen Oberfläche einen Rₖᵤ-Wert für die Steilheit von 2,8 +/- 1,0 hat und/oder einen R_{z}-Wert für die Rautiefe von 5,55 +/- 1,5. Die Werte für Rₖᵤ und R_{z} ergeben sich dabei nach der Norm DIN EN ISO 4287. Dafür ist das Formwerkzeug an seiner Oberfläche beispielsweise geschliffen. Insbesondere kann ein rautenförmiges Muster von Riefen vorgesehen sein, wobei parallele Riefen beispielsweise einen Abstand von 0,109 Millimetern aufweisen.

In weiterer vorteilhafter Ausgestaltung des Verfahrens ist es vorgesehen, dass das Verfahren folgende Schritte umfasst:
- Aufbringen einer ersten Farbschicht auf der Rückseite des Glaselements;
- Entfernen von Teilbereichen dieser ersten Farbschicht, insbesondere mittels eines Lasers;
- Aufbringen einer zweiten Farbschicht auf der Rückseite des Glaselements mit einem farblichen Kontrast zu der ersten Farbschicht, wodurch sichtbare Symbole für die Bedienoberfläche gebildet werden.

So können die zwei Farbschichten besonders kostengünstig ohne weitere Vorkehrungen auf der gesamten Rückseite des Glaselements aufgetragen werden. Durch das dazwischen erfolgende Entfernen von Teilbereichen der ersten Farbschicht werden die für den Nutzer sichtbaren Symbole gebildet. Die Teilbereiche entsprechen also der negativen oder positiven Form der jeweiligen Symbole. Das Entfernen der ersten Farbschicht mittels eines Lasers ist dabei besonders schnell und kostengünstig. Insbesondere wird bei einer Entfernung mittels eines Lasers zuverlässig eine Beschädigung des Glaselements vermieden. Alternativ können sonst auch mechanische oder chemische Verfahren zum Entfernen von Teilbereichen der ersten Farbschicht genutzt werden.

Weitere Merkmale der Erfindung ergeben sich aus den Ansprüchen, den Figuren und der Figurenbeschreibung. Dabei zeigt:
- Fig. 1: in einer schematischen Draufsicht ein Oberflächenelement für eine Bedieneinrichtung eines Kraftfahrzeugs;
- Fig. 2: in einer schematischen Draufsicht ein Formwerkzeug für einen Tiefziehprozess zum Fertigen eines Glaselements für das Oberflächen-element gemäß Fig. 1; und
- Fig. 3: in einer schematischen, ausschnittsweisen seitlichen Schnittansicht das Formwerkzeug gemäß Fig. 2.

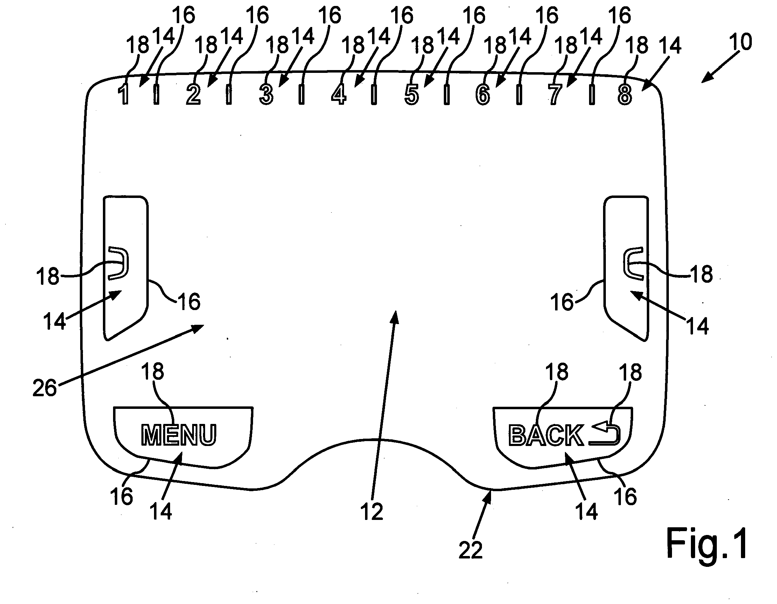

Fig. 1 zeigt in einer schematischen Draufsicht ein Oberflächenelement 10 für eine Bedieneinrichtung eines Kraftfahrzeugs, welches ein in einem Tiefziehprozess gefertigtes Glaselement 12 mit einer Mehrzahl von Oberflächenbereichen 14 umfasst, durch deren Berührung eine jeweilige Bedieneingabe erfolgt. Bei der gezeigten Bedieneinrichtung handelt es sich beispielsweise um ein sogenanntes Touchpad zur Steuerung eines Infotainmentsystems des Kraftfahrzeugs. Beispielsweise durch eine Berührung der mit den Zahlen 1 bis 8 gekennzeichneten Oberflächenbereichen 14 kann ein jeweiliger zugeordneter Radiosender ausgewählt werden. Alternativ kann die Bedieneinrichtung beispielsweise auch als Touchscreen ausgebildet sein. In beiden Fällen kann es zur Auslösung einer Bedieneingabe erforderlich sein, dass eine Bedienkraft beim Berühren der Oberflächenbereiche 14 eine vorbestimmte Bedienkraft übersteigt.

Eine jeweilige erfolgte Bedieneingabe kann einem Nutzer der Bedieneinrichtung durch eine optische und/oder akustische Rückmeldung signalisiert werden. Alternativ oder zusätzlich kann auch eine haptische Rückmeldung beispielsweise in Form eines Klickens und/oder einer Vibration der Glasoberfläche signalisiert werden. Die Rückmeldung vereinfacht ebenfalls die Bedienung der Bedieneinrichtung für den Nutzer. Insbesondere kann der Nutzer so auch bei einer blinden Bedieneingabe erkennen, ob diese erfolgreich war oder nicht.

Die jeweiligen Oberflächenbereiche 14 des Oberflächenelements 10 sind durch entsprechende Strukturelemente 16 in dem Glaselement 12 haptisch erfühlbar markiert. Im in Fig. 1 gezeigten Beispiel sind die Oberflächenbereiche 14, welche mit den Zahlen 1 bis 8 gekennzeichnet sind, jeweils durch ein Strukturelement 16 zwischen diesen Oberflächenbereichen 14 markiert. Die Strukturelemente 16 trennen also quasi die Oberflächenbereiche 14 voneinander haptisch erfühlbar ab. Die Strukturelemente 16, welche auch als Fühlhilfen bezeichnet werden, erleichtern so einem Nutzer bei einer Berührung des Oberflächenelements 10 sich zu orientieren.

Die Strukturelemente 16 sind dabei beispielsweise als Erhöhung ausgebildet, sodass diese bei einem Darübergleiten mit einem Finger ertastbar ist. Jedes Strukturelement 16 kann aber beispielsweise nicht nur als Erhöhung, sondern alternativ oder zusätzlich auch als Vertiefung, Wölbung, Krümmung und/oder Rundung der Oberfläche des Glaselements 12 ausgebildet sein. Jedes Strukturelement 16 kann dabei zudem jeweils eine individuelle Form aufweisen. Auch können einzelne Oberflächenbereiche 14 durch eine Stufe voneinander getrennt sein.

Die auf dem Oberflächenelement 10 sichtbaren Symbole 18, zu welchen die Zahlen 1 bis 8 und auch beispielsweise die Schriftzüge "MENU" und "BACK" gehören, sind dabei durch zwei Farbschichten auf der Rückseite des Glaselements 12 gebildet. Die erste Farbschicht ist beispielsweise schwarz. Sie wird ganzflächig auf der Rückseite des Glaselements 12 aufgetragen und hat beispielsweise eine Schichtdicke von kleiner oder gleich 15 Mikrometern. Anschließend werden die Teilbereiche dieser ersten Farbschicht, welche die Symbole 18 bilden, wieder von dem Glaselement 12 mittels eines Lasers entfernt. In einem weiteren Schritt wird die zweite Farbschicht, welche beispielsweise eine weiße und transluzente Farbe ist, ebenfalls ganzflächig auf der Rückseite des Glaselements 12 aufgetragen. Beide Farbschichten zusammen weisen vorzugsweise eine Schichtdicke von kleiner oder gleich 21 Mikrometern auf, sodass das Oberflächenelement 10 besonders leicht ist. Die Farbschichten können besonders dünn sein, da sie vor Abrieb geschützt auf der Rückseite des Glaselements 12 aufgebracht sind. Durch den sichtbaren Farbkontrast zwischen den zwei Farbschichten werden die sichtbaren Symbole 18 auf der Vorderseite des Glaselements 12 gebildet. Vorzugsweise ist wenigstens die zweite Farbschicht lichtdurchlässig, sodass auch eine Hintergrundbeleuchtung der Symbole 18 realisiert werden kann.

Ein besonders gut erkennbarer farblicher Kontrast wird beispielsweise erzeugt, wenn die erste Farbschicht den folgenden Farbtonstandard aufweist: L = 27,0 +/- 1,0; a = -0,7 +/- 0,5; b= -1,5 +/- 0,5 und die zweite Farbschicht: : L = 70,2 +/- 2,0; a = -1,6 +/- 0,5; b= -3,1 +/- 0,5. Die zweite, weiße Farbschicht hat dabei einen Wert für die Transmission von 6,0% +/- 1,5% (at 550). Der Farbtonstandard wurde dabei mit einer Konica Minolta CM-2600d gemessen.

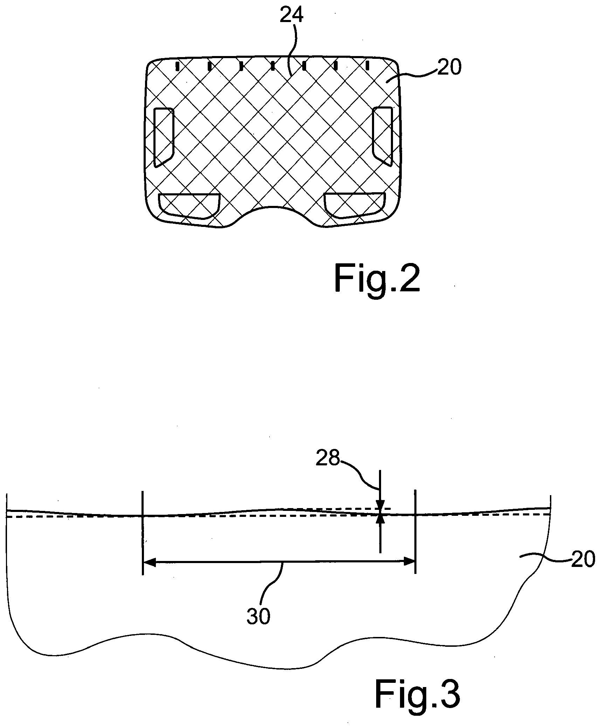

Die Strukturelemente 16 werden vorteilhafterweise gemeinsam mit dem Glaselement 12 einstückig in einem einzigen Fertigungsschritt in einem Tiefziehprozess hergestellt. Zu diesem Zweck wird ein Glasrohling beispielsweise erwärmt und in ein Formwerkzeug 20, wie es in der schematischen Draufsicht von Fig. 2 abgebildet ist, eingelegt. Mittels eines Stempels oder eines Vakuums wird dieser Glasrohling gegen das Formwerkzeug 20 gepresst. Das Formwerkzeug 20 weist die negative Form des herzustellenden Glaselements 12 auf. Diese Form wird durch das Anpressen auf den Glasrohling übertragen und damit das Glaselement 12 geformt. Das so hergestellte Glaselement 12 ist besonders robust, insbesondere da sich die Strukturelemente 16 nicht von dem Glaselement 12 lösen können.

Anschließend kann das Glaselement 12 an seiner Außenkante 22 geschliffen werden, um besonders präzise Abmaße zu erzeugen. Zudem kann die Oberfläche des Glaselements 12 noch geätzt werden, um die durch das Formwerkzeug 20 eingeprägte Oberflächenstruktur wenigstens teilweise abzuschleifen und/oder abzurunden.

Weiterhin weist das Formwerkzeug 20 ein Flächenstrukturelement 24 auf, welches seine Oberfläche großflächig bedeckt. Dieses Flächenstrukturelement 24 ist durch eine Kreuzfräsung gebildet. Bei dieser Kreuzfräsung werden in die Oberfläche des Formwerkzeugs 20 im Abstand von circa 0,109 Millimetern parallele Riefen eingebracht. Die Tiefe der Riefen beträgt dabei circa 0,002 Millimeter und deren Rundung 0,75 Millimeter. Das Formwerkzeug 20 ist in Fig. 3 schematisch ausschnittsweise in einer seitlichen Schnittansicht gezeigt. Die Tiefe einer einzelnen Riefe des Flächenstrukturelements 24 in der Oberfläche des Formwerkszeugs 20 ist dabei durch Pfeil 28 markiert. Der Abstand zwischen zwei Riefen ist durch Pfeil 30 markiert.

Es handelt sich bei dem Flächenstrukturelement 24 also quasi um eine Mikrostruktur der Oberfläche des Formwerkzeugs 20, wodurch diese eine gewissen Oberflächenrauigkeit aufweist. Vorzugsweise weist diese Mikrostruktur dabei einen Wert für die Steilheit Rₖᵤ nach DIN EN ISO 4287 von 2.8 +/-0,8 auf und einen Wert für die Rautiefe R_{z} von 5,55 +/- 1,0 auf, ebenfalls nach DIN EN ISO 4287.

Durch das Flächenstrukturelement 24 des Formwerkzeugs 20 wird während des Tiefziehprozesses auf der gesamten Bedienoberfläche des Oberflächenelements 10 in der Bedienoberfläche des Glaselements 12 ein korrespondierendes Flächenstrukturelement 26 erzeugt. Auf der Bedienoberfläche des Glaselements 12 wird also eine bestimmte Oberflächenbeschaffenheit aufgeprägt. Aufgrund dieser Oberflächenbeschaffenheit ist das Glaselement 12 besonders gut zu reinigen. Außerdem ist es resistent gegen Verschmutzungen, insbesondere gegen Fingerabdrücke bei einer Berührung. Beim Bedienen kommt es aufgrund der Oberflächenbeschaffenheit zu einer besonders geringen Geräuschentwicklung, insbesondere durch ein Gleiten des Fingers über die Bedienoberfläche. Aufgrund der Oberflächenrauigkeit des Glaselements 12 kann ein Finger besonders gut über die Bedienoberfläche des Oberflächenelements 10 gleiten. Zudem wird die Bedienoberfläche des Glaselements 12 aufgrund des Flächenstrukturelements 26 durch Sonneneinstrahlung besonders geringfügig erwärmt.

Dadurch, dass das Flächenstrukturelement 26, mittels welchem die Oberflächenbeschaffenheit des Glaselements 12 vorgegeben ist, gemeinsam mit dem Glaselement 12 in einem einzigen Fertigungsschritt in einem Tiefziehprozess hergestellt wird, ist es zudem besonders robust, insbesondere gegen Abrieb durch Bedieneingaben. Durch ein nachträgliches Ätzen der Oberfläche wird dieser Effekt zusätzlich verstärkt. Mit dem Oberflächenelement 10 kann also ein Touchpad mit einer Echtglasoberfläche realisiert werden, welches besonders hochwertig ist.

## Patentansprüche

1. Verfahren zum Herstellen eines Oberflächenelements (10) für eine Bedieneinrichtung eines Kraftfahrzeugs, bei welchem ein Glaselement (12) mit einer Mehrzahl von Oberflächenbereichen (14), durch deren Berührung eine jeweilige Bedieneingabe erfolgt, in einem Tiefziehprozess gefertigt wird,
wobei jeweilige Strukturelemente (16) in das Glaselement (12) eingebracht werden, durch die die jeweiligen Oberflächenbereiche (14) haptisch erfühlbar markiert werden,
**dadurch gekennzeichnet, dass**
im Anschluss an den Tiefziehprozess eine Oberfläche wenigstens eines der Strukturelemente geätzt wird.

2. Verfahren nach Anspruch 1,
**dadurch gekennzeichnet, dass**
wenigstens eines der Strukturelemente (16) als Flächenstrukturelement (26) ausgebildet ist, mittels welchem zumindest ein Teil des entsprechenden Oberflächenbereichs (14) versehen ist, wobei das Flächenstrukturelement (26) mit einem korrespondierenden Flächenstrukturelement (24) eines Formwerkzeugs (20) in dem Tiefziehprozess eingebracht wird.

3. Verfahren nach einem der Ansprüche 1 oder 2,
**gekennzeichnet durch** die Schritte:
- Aufbringen einer ersten Farbschicht auf der Rückseite des Glaselements (12);
- Entfernen von Teilbereichen dieser ersten Farbschicht;
- Aufbringen einer zweiten Farbschicht auf der Rückseite des Glaselements (12) mit einem farblichen Kontrast zu der ersten Farbschicht, wodurch wenigstens ein sichtbares Symbol (18) auf einem der Oberflächenbereiche (14) gebildet wird.

4. Verfahren nach Anspruch 3,
**dadurch gekennzeichnet, dass**
die Teilbereiche der ersten Farbschicht mittels eines Lasers entfernt werden.

5. Verfahren nach einem der vorhergehenden Ansprüche,
**dadurch gekennzeichnet, dass**
wenigstens eines der Strukturelemente (16) als Stufe ausgebildet wird, welches den zugeordneten Oberflächenbereich (14) zumindest bereichsweise begrenzt.

6. Verfahren nach einem der vorhergehenden Ansprüche,
**dadurch gekennzeichnet, dass**
wenigstens eines der Strukturelemente (16) in dem Tiefziehprozess eingebracht wird.

7. Verfahren nach einem der vorhergehenden Ansprüche,
**dadurch gekennzeichnet, dass**
das Glaselement (12) aus einem Kalk-Natron-Glas gebildet wird.

## Claims

1. Method for producing a surface element (10) for an operating device of a motor vehicle, in which a glass element (12) is made in a deep-drawing process with a plurality of surface areas (14), which when touched activate a respective operator entry,
wherein respective structure elements (16) are introduced into the glass element (12), by means of which the respective surface areas (14) are marked in a haptically tangible manner,
**characterised in that**
following the deep-drawing process a surface of at least one of the structure elements is etched.

2. Method according to claim 1,
**characterised in that**
at least one of the structure elements (16) is designed as a surface structure element (26), which at least of at least one portion of the corresponding surface area (14) is provided with; wherein the surface structure element (26) is introduced in the deep-drawing process by a corresponding surface structure element (24) of a forming tool (20).

3. Method according to any of claims 1 or 2,
**characterised by** the steps:
- applying a first colour layer onto the rear side of the glass element (12),
- removing portions of said first colour layer,
- applying a second colour layer onto the rear side of the glass element (12) which has a contrasting colour from the first colour layer, whereby at least one visible symbol (18) is formed on one of the surface areas (14).

4. Method according to claim 3,
**characterised in that**
the portions of the first colour layer are removed by means of a laser.

5. Method according to any of the preceding claims,
**characterised in that**
at least one of the structure elements (16) is designed as a step, which at least partly delimits the assigned surface area (14).

6. Method according to any of the preceding claims,
**characterised in that**
at least one of the structure elements (16) is introduced in the deep-drawing process.

7. Method according to any of the preceding claims,
**characterised in that**
the glass element (12) is made from a soda lime glass.

## Revendications

1. Procédé de fabrication d'un élément de surface (10) pour un dispositif de commande d'un véhicule à moteur, dans lequel un élément en verre (12) avec une pluralité de zones de surface (14), par le contact desquelles une entrée de commande respective a lieu, est fabriqué dans un processus d'emboutissage,
dans lequel des éléments structuraux (16) respectifs sont introduits dans l'élément en verre (12), par lesquels les zones de surface (14) respectives peuvent être marquées de manière haptiquement perceptible,
**caractérisé en ce que**
suite au processus d'emboutissage, une surface d'au moins un des éléments structuraux est gravée.

2. Procédé selon la revendication 1,
**caractérisé en ce que**
au moins un des éléments structuraux (16) est réalisé en tant qu'élément structural plan (26), au moyen duquel au moins une partie de la zone de surface (14) correspondante est dotée, dans lequel l'élément structural plan (26) est introduit avec un élément structural plan (24) correspondant d'un outil de moulage (20) dans le processus d'emboutissage.

3. Procédé selon l'une quelconque des revendications 1 ou 2,
**caractérisé par** les étapes :
- application d'une première couche de couleur à l'arrière de l'élément en verre (12) ;
- retrait de zones partielles de cette première couche de couleur;
- application d'une deuxième couche de couleur à l'arrière de l'élément en verre (12) avec un contraste de couleur par rapport à la première couche de couleur, moyennant quoi un symbole visible (18) est formé sur une des zones de surface (14).

4. Procédé selon la revendication 3,
**caractérisé en ce que**
les zones partielles de la première couche de couleur sont retirées au moyen d'un laser.

5. Procédé selon l'une quelconque des revendications précédentes,
**caractérisé en ce que**
au moins un des éléments structuraux (16) est réalisé en tant qu'étage, lequel délimite au moins par zone la zone de surface (14) associée.

6. Procédé selon l'une quelconque des revendications précédentes,
**caractérisé en ce que**
au moins un des éléments structuraux (16) est introduit dans le processus d'emboutissage.

7. Procédé selon l'une quelconque des revendications précédentes,
**caractérisé en ce que**
l'élément en verre (12) est formé d'un verre sodocalcique.
